# EUROPÄISCHE PATENTSCHRIFT

(11) **EP 3 987 186 B1**
(45) Veröffentlichungstag und Bekanntmachung des Hinweises auf die Patenterteilung: **14.08.2024**
(21) Anmeldenummer: 20733590.2
(22) Anmeldetag: 17.06.2020
(51) Int. Cl.: F04D 15/00, F24D 19/10

(54) **VERFAHREN ZUR REGELUNG EINER UMWÄLZPUMPE SOWIE UMWÄLZPUMPE**
METHOD FOR CONTROLLING A CIRCULATING PUMP, AND CIRCULATING PUMP
PROCÉDÉ POUR RÉGLER UNE POMPE DE CIRCULATION ET POMPE DE CIRCULATION

(30) Priorität: 19.06.2019 DE 102019004316
(43) Veröffentlichungstag der Anmeldung: 27.04.2022
(73) Patentinhaber: KSB SE & Co. KGaA, 67227 Frankenthal (DE)
(72) Erfinder: ECKL, Martin, 67227 Frankenthal (DE); SCHULLERER, Joachim, 76764 Rheinzabern (DE)
(86) Internationale Anmeldenummer: PCT/EP2020/066701
(87) Internationale Veröffentlichungsnummer: WO 2020/254363

(56) Entgegenhaltungen:
- CA-A1- 2 274 782
- DE-A1- 19 513 394

## Beschreibung

Die Erfindung betrifft ein Verfahren zur Regelung einer Heizungsumwälzpumpe mit variabler Drehzahl in einer hydraulischen Heizungsanlage, wobei die Pumpenregelung die einzuregelnde Soll-Förderhöhe vorgibt und die Drehzahl der Pumpe anpasst, um die Soll-Förderhöhe zu erreichen.

Ältere Heizungsumwälzpumpen, insbesondere für Heizungsanlagen kleiner oder mittlerer Leistung, sind oftmals ungeregelt. Die Pumpendrehzahl muss hier manuell auf die jeweilige Leistungsanforderung der Heizungsanlage eingestellt werden, wobei die Pumpe üblicherweise unterschiedliche Drehzahlstufen zur manuellen Auswahl bereithält. Die passende Drehzahlstufe sollte so gewählt werden, dass auch in Zeiten auftretender Leistungsspitzen ein ausreichender Förderstrom für die Raumbeheizung bereitgestellt wird. Da solche Leistungsspitzen meist unregelmäßig und nur kurzzeitig auftreten, läuft eine solche Pumpe überwiegend in einem energetisch ungünstigen Betrieb.

Die DE 195 13 394 A1 zeigt eine temperaturabhängig geführte Leistungssteuerung für ein elektrisch betriebenes Pumpenaggregat mit mindestens zwei verschiedenen Leistungsstufen. Die CA 2 274 782 A1 offenbart eine Druckerhöhunganlage mit einer drehzahlgeregelten Pumpe.

Moderne Umwälzpumpen sind mit Umrichter und Drehzahlregler ausgestattet, wodurch die Pumpen ihre Leistungsaufnahme durch Drehzahlanpassung reduzieren können. Die Anpassung der Drehzahl erfolgt anhand einer spezifischen Regelkurve. Während des Betriebs ermittelt die Pumpe per Sensorik oder Schätzalgorithmus den aktuellen Förderstrom und die Ist-Förderhöhe und stellt die Drehzahl so ein, dass sich der Betriebspunkt nur entlang der verwendeten Regelkurve verschiebt. Die Art der Regelkurve definiert also die zu Grunde gelegte Regelstrategie. Beispielsweise wird bei einer Konstantdruckregelung die Drehzahl unabhängig vom Förderstrom stets auf eine konstante Förderhöhe geregelt. Abweichend davon wird bei einer Proportionaldruckregelung die Förderhöhe entlang einer linear ansteigenden Geraden geregelt, d.h. die Soll-Förderhöhe verhält sich proportional zum Ist-Förderstrom.

Ein Ansatz zur Optimierung einer solchen Pumpenregelung wurde durch die Anmelderin mit einer zeitgleich hinterlegten Parallelanmeldung unter Schutz gestellt, nachfolgend auch als dynamische Drehzahlanpassung bezeichnet. Der Optimierungsansatz sieht vor, die Geschwindigkeit der Antriebsdrehzahländerung der Umwälzpumpe während der Einstellung der Soll-Förderhöhe dynamisch anzupassen, und zwar abhängig davon, ob die einzustellende Soll-Förderhöhe größer oder kleiner der aktuellen Ist-Förderhöhe der Heizungsumwälzpumpe ist. Hat sich die Anlagencharakteristik geändert, bspw. durch Änderung des Öffnungsgrades der Thermostatventile, so dass die aktuelle Ist-Förderhöhe der Pumpe über der Soll-Förderhöhe liegt, ändert (hier reduziert) die Pumpe ihre Antriebsdrehzahl schneller als für den Fall, dass die Soll-Förderhöhe größer ist als die Ist-Förderhöhe. Dies bedeutet, dass eine Verringerung der Drehzahl schneller als eine Erhöhung der Drehzahl ausgeführt wird. Die Drehzahländerung folgt in der Regel einer definierten Drehzahlrampe, die die Drehzahl gegenüber der Zeit darstellt. Eine Verringerung der Drehzahl wird demzufolge mit einer steileren (abfallenden) Drehzahlrampe betrieben, während eine Drehzahlerhöhung mit einer weniger steilen (ansteigenden) Drehzahlrampe erfolgt. Durch die schnellere Absenkung der Antriebsdrehzahl bei Hₛₒₗₗ<Hᵢₛₜ kann eine Leistungsersparnis des Pumpenantriebs erzielt werden. Die Erhöhung der Drehzahl bei Hᵢₛₜ<Hₛₒₗₗ gestattet hingegen eine Überwachung der Heizungsanlage auf eine Über- bzw. Unterversorgung.

Die Verwendung einer adaptiven Drehzahlrampe für das Anheben bzw. Reduzieren der Drehzahl funktioniert gut, solange der Heizkessel der Heizungsanlage vorlauftemperaturgeregelt ist, was in der Regel bei den meisten Anlagen der Fall ist. Es existieren jedoch vereinzelt Kesselsysteme mit Rücklauftemperaturregelung. In einem solchen Fall muss das Schaltverhalten des Heizkessels und dessen Wechselwirkung mit dem Gebäude beachtet werden. Um diese Zusammenhänge zu verstehen, werden die folgenden drei Fälle betrachtet.
- Fall 1:: Pumpe im Vorlauf eingebaut und Vorlaufregelung des Kessels
- Fall 2:: Pumpe im Vorlauf eingebaut und Rücklaufregelung des Kessels
- Fall 3:: Pumpe im Rücklauf eingebaut

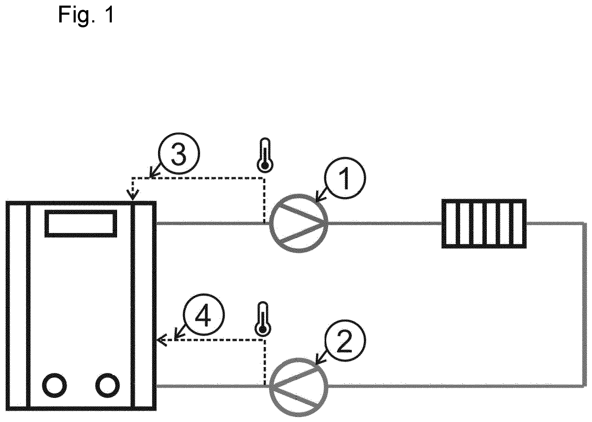

Figur 1 zeigt einen schematisch dargestellten Heizkreislauf zur Verdeutlichung der beiden Regelarten des Heizkessels sowie der möglichen Einbaulagen der Umwälzpumpe. Die Pumpe 1 kennzeichnet eine im Vorlauf des Heizungskreislaufs installierte Umwälzpumpe, während die Umwälzpumpe 2 im Rücklauf montiert ist. Bezugszeichen 3 kennzeichnet die Vorlauftemperatur als Regelgröße des Heizkessels, während Bezugszeichen 4 die Rücklauftemperatur als Regelgröße zeigt.

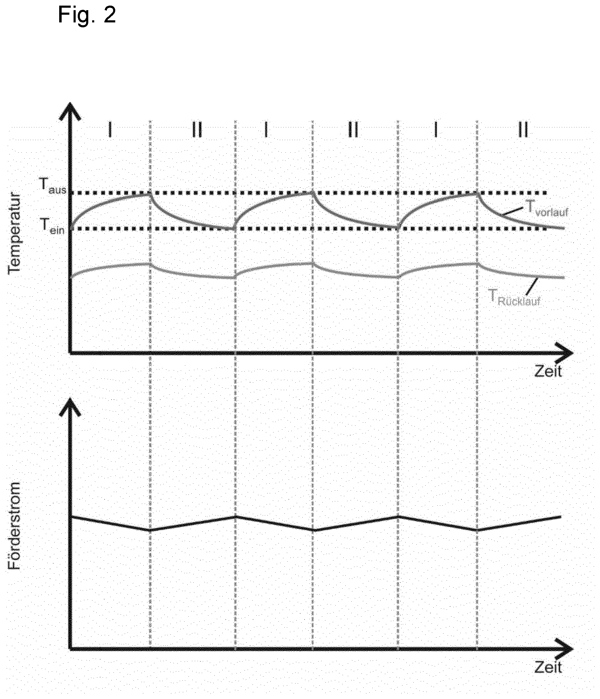

Das Zeit-Mediumtemperatur-Diagramm oben in Figur 2 zeigt den Verlauf der Vorlauf- bzw. Rücklauftemperatur bei einer Vorlauftemperaturregelung des Heizkessels. Der zweipunktgeregelte Kessel schaltet den Brenner bei Unterschreitung der unteren Temperaturgrenze Tₑᵢₙ ein und beim Überschreiten der Obergrenze Tₐᵤₛ aus. Der Verlauf der Rücklauftemperatur ähnelt charakteristisch der Vorlauftemperatur, allerdings mit kleinerer Amplitude. Der gekennzeichnete Zeitbereich I stellt die Phasen dar, bei denen der Kessel eingeschaltet ist. Die Vorlauftemperatur steigt schneller als die Rücklauftemperatur, sodass ein erhöhter Wärmeeintrag in das Gebäude stattfindet. Als Folge dessen schließen die Thermostatventile der Heizkörper der Heizungsanlage und der Förderstrom sinkt ab, was sich aus dem Zeit-Förderstrom-Diagramm (unten in Figur 2) ergibt.

Der Bereich II stellt die Phasen dar, bei denen der Kessel ausgeschaltet ist. Die Vorlauftemperatur sinkt schneller als die Rücklauftemperatur, sodass ein geringerer Wärmeeintrag in das Gebäude stattfindet. Als Folge dessen öffnen die Thermostatventile und der Förderstrom steigt.

Die Anwendung des vorgestellten Regelungsverfahren der Anmelderin mit entsprechender Dynamik der Änderungsgeschwindigkeit der Antriebsdrehzahl, insbesondere mit adaptiver Drehzahlrampe, bewirkt, dass während der Phase I die Drehzahl aufgrund der höheren Dynamisierung mit höherer Drehzahländerungsrate schneller absinkt und die Pumpe dadurch ihren Stromverbrauch reduzieren kann. Im Bereich II wird stattdessen eine Drehzahländerung mit kleinerer Änderungsrate vorgenommen, wodurch die Drehzahl etwas langsamer ansteigt als es ohne den Einsatz einer solch dynamischen Drehzahländerung mit adaptiver Rampe der Fall wäre. Da die Ausschläge gering sind, werden keine negativen Wechselwirkungen mit der Kesselsteuerung erwartet.

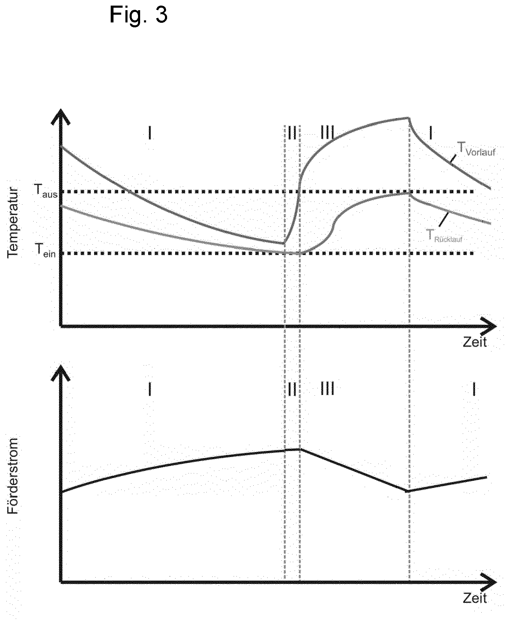

Figur 3 zeigt nunmehr die entsprechenden Zeitdiagramme der Mediumtemperatur bzw. des Förderstroms für einen Heizkreislauf mit Heizkessel und Rücklauftemperaturregelung. Bei der Regelung der Rücklauftemperatur hält der Kessel die Temperatur konstant, mit der das Medium aus dem Gebäude austritt. Der Bereich I zeigt die Phase während der Kessel ausgeschaltet ist. Vor- und Rücklauftemperatur nehmen ab. Da die Vorlauftemperatur schneller sinkt als die Rücklauftemperatur, nimmt die Differenz zwischen Vor- und Rücklauftemperatur und dadurch der Wärmeeintrag in das Gebäude ab. Der geringere Wärmeeintrag führt zu einem Öffnen der Thermostatventile und dadurch zu einem Anstieg des Förderstroms. Der Bereich II beginnt, wenn die Rücklauftemperatur die untere Schwelle Tₑᵢₙ erreicht hat. Der Kessel schaltet dann den Brenner ein und die Vorlauftemperatur steigt sprunghaft an. Die Rücklauftemperatur fällt zunächst weiter ab, da sich das Medium noch im Gebäude befindet. Nachdem das Medium durch das gesamte Gebäude geflossen ist, steigt auch die Rücklauftemperatur an. Mit diesem Zeitpunkt beginnt die Phase III. Durch den höheren Wärmeeintrag in das Gebäude schließen die Thermostatventile und der Förderstrom reduziert sich.

Im Bereich I wird aufgrund der dynamischen Drehzahländerung der Anstieg des Förderstroms verzögert. Da diese Verzögerung nur geringfügig ist und der Bereich I lange andauert, sollte diese Verzögerung keinen negativen Einfluss auf den gesamten Heizprozess der Heizungsanlage haben. Kritisch hingegen ist hier jedoch der Bereich II. Die Vorlauftemperatur steigt hier rapide an und es ist wichtig, dass das Medium schnell in das Gebäude transferiert wird. Eine Verzögerung des Drehzahlanstieges durch die adaptive Rampe würde sich negativ auswirken, denn ein verzögerter Wärmeeintrag in das Gebäude erhöht die Kesselverluste (im Folgenden "Kesselverlustproblem" genannt).

Die vorliegende Anmeldung setzt sich nun konkret mit der vorstehenden Problembeschreibung auseinander und sucht daher nach einem Lösungsansatz, um das neuartige Regelungsverfahren der Anmelderin auch in Heizungsanlagen mit Rücklauftemperaturregelung vorteilhaft einsetzen zu können.

Gelöst wird diese Aufgabe durch ein Verfahren gemäß den Merkmalen des Anspruchs 1. Vorteilhafte Ausgestaltungen des Verfahrens sind Gegenstand der abhängigen Ansprüche.

Erfindungsgemäß wird für das neuartige Verfahren der Anmelderin vorgeschlagen, dass die dynamische Drehzahlanpassung der Umwälzpumpe zusätzlich in Abhängigkeit der ausgeführten Regelart des Heizungskessels eingestellt wird. Wie eingangs bereits beschrieben wurde, lässt sich die dynamische Drehzahlanpassung problemlos in einer Heizungsanlage mit vorlaufgeregeltem Heizkessel einsetzen. Für einen solchen Fall soll die dynamische Drehzahlanpassung daher im Idealfall stets ausgeführt werden. Das dynamische Verhalten der Drehzahlanpassung soll jedoch für Umwälzpumpen, die innerhalb einer Heizungsanlage mit rücklauftemperaturgeregeltem Heizkessel eingesetzt werden, abweichend sein. Es ist daher der erfindungsgemäße Ansatz dieser Erfindung, die Dynamik der Drehzahlanpassung auch in Abhängigkeit der angewendeten Regelstrategie des Heizkessels einzustellen. Die dynamische Drehzahlregelung soll demzufolge nur noch temporär eingesetzt werden.

Es besteht die Möglichkeit, die dynamische Drehzahlanpassung vollständig zu deaktivieren, falls die Pumpe in einer Heizungsanlage mit rücklauftemperaturgeregeltem Kessel betrieben wird. Damit wird verhindert, dass das Anheben der Drehzahl bei einer notwendigen Erhöhung der Förderhöhe der Umwälzpumpe durch die vorgeschlagene dynamische Drehzahlanpassung verzögert wird, sondern stattdessen durch die konventionelle Drehzahlregelung eingestellt, d.h. vergleichsweise schneller eingestellt wird. Dadurch lassen sich mögliche Kesselverluste aufgrund eines verzögerten Wärmeeintrags in das Gebäude während einer Kesselheizphase weitestgehend vermeiden.

Um jedoch trotzdem von der vorteilhaften Energieeinsparung der dynamischen Drehzahlanpassung profitieren zu können, ist es vorteilhaft, die dynamische Drehzahlanpassung lediglich zeitweise zu deaktivieren, und zwar vorzugsweise während einer Aufheizphase des Heizkessels mit Rücklauftemperaturregelung. Während einer Abkühlphase des Heizkessels kann stattdessen die Drehzahlregelung mit höherer Dynamik sprich höherer Drehzahländerungsrate erfolgen, um die beschriebene Leistungseinsparung zu erreichen.

Besonders vorteilhaft ist es in diesem Zusammenhang, wenn die Umwälzpumpe eine Deaktivierung der dynamischen Drehzahlanpassung automatisiert vornimmt. Um dies zu ermöglichen muss die Heizungsumwälzpumpe Kenntnis über die aktuelle Betriebsphase des Heizkessels haben. Eine Variante zur automatischen Detektion der aktuellen Betriebsphase basiert auf einer Beobachtung der Mediumtemperatur. Der Temperaturverlauf lässt sich durch eine interne Sensorik der Pumpe erfassen. Denkbar ist auch der Einsatz einer externen Sensorik, die mit der Pumpenregelung zum Datenaustausch in Verbindung steht. Als besonders vorteilhaft erweist sich hier die Auswertung des Temperaturgradienten der Vorlauftemperatur. Bspw. zeigt der Verlauf der Vorlauftemperatur während der Heizphase einen vergleichsweise starken Temperaturanstieg. Übersteigt der Temperaturgradient der beobachteten Vorlauftemperatur einen definierten Schwellwert, geht die Pumpensteuerung davon aus, dass sich der Heizkessel in der Aufheizphase befindet und deaktiviert die dynamische Drehzahlanpassung temporär vorzugsweise bis zum Ende der Heizphase.

Gemäß einer optionalen Ausführung des Verfahrens kann vorgesehen sein, dass die Umwälzpumpe nicht nur die dynamische Drehzahlanpassung deaktiviert, sondern ergänzend für den Fall, dass der Temperaturgradient der Vorlauftemperatur einen definierten Schwellwert übersteigt, den Laufradantrieb mit maximaler Drehzahl betreibt. Ein Betrieb mit maximaler Drehzahl kann für die Dauer der Überschreitung des definierten Schwellwertes durch den aktuellen Temperaturgradienten der Vorlauftemperatur erfolgen. Der Betrieb mit maximaler Drehzahl gewährleistet eine schnelle Verteilung des aufgeheizten Heizungsmediums im Gebäude.

Sobald der Anstieg der Vorlauftemperatur weniger steil erfolgt, d.h. der Temperaturgradient unter den Schwellwert fällt, wird die Pumpe vorzugsweise wieder zurück in den normalen Betriebsmodus mit konventioneller Drehzahlregelung geschaltet.

Bleibt die Drehzahl zu lange auf dem maximalen Drehzahlniveau, besteht die Gefahr des Kaltlaufens des Heizkessels. Aus diesem Grund wird zum Schutz des Kessels vorgeschlagen, dass die Umwälzpumpe während einer Aufheizphase des Kessels nicht beliebig oft in den Modus mit maximaler Drehzahl geschaltet werden darf. Vorteilhaft ist hier die Definition eines Zeitfensters während diesem ein Umschalten auf die maximale Drehzahl nur für eine vordefinierte Anzahl zulässig ist. D.h. schwankt der Temperaturgradient um den entsprechenden Schwellwert, dann soll die Pumpe nur der definierten Maximalanzahl entsprechend oft in den Modus mit maximaler Drehzahl schalten. Dadurch wird ein ständiges Hoch- und Runterfahren der Drehzahl bei möglichen Schwankungen des Temperaturgradienten um den Schwellwert vermieden. Ist die Maximalanzahl bereits ausgeschöpft, so wird ein Betrieb der Pumpe mit maximaler Drehzahl auch bei Überschreiten des entsprechenden Grenzwertes durch den Temperaturgradienten der Vorlauftemperatur abgelehnt. Das definierte Zeitfenster ist idealerweise an die durchschnittliche Dauer einer Aufheizphase des Heizkessels angelehnt. Ein entsprechendes Zeitfenster beträgt beispielsweise 10 Minuten. Die Maximalanzahl von Umschaltvorgängen der Pumpe auf die maximale Drehzahl ist vorzugsweise auf drei, bevorzugt zwei, besonders bevorzugt auf einen einzigen Schaltvorgang begrenzt.

Für den Fall, dass die Heizungsanlage einen Heizkessel mit Rücklauftemperaturregelung vorsieht, die eingesetzte Umwälzpumpe jedoch keine entsprechende Sensorik zur Erfassung der Vorlauftemperatur aufweist, beispielsweise weil diese im Rücklauf verbaut ist, sollte die entsprechende dynamische Drehzahlregelung vollständig deaktiviert werden, da ansonsten eine belastbare Erkennung der Aufheizphasen des Kessels und eine entsprechend betriebsphasenabhängige Deaktivierung der dynamischen Drehzahlanpassung nicht zuverlässig möglich ist.

Wie vorstehend erläutert wurde, ist es für die Verfahrensausführung von Bedeutung, dass die Umwälzpumpe Kenntnis über die angewendete Kesselregelung hat. Daneben spielt die Einbauposition der Umwälzpumpe in der Heizungsanlage eine tragende Rolle, insbesondere wenn eine interne Sensorik zur Erfassung der Mediumtemperatur vorhanden ist. Es wird daher in vorteilhafter Weise vorgeschlagen, dass eine Logik der Umwälzpumpe automatisch die angewendete Regelart des verbauten Heizkessels erkennt. Möglich wird dies durch eine Beobachtung der Mediumtemperatur durch die Pumpensteuerung. Insbesondere erfolgt eine Beobachtung des Temperaturverlaufs über einen spezifischen Zeitraum. Charakteristisch für die Rücklaufregelung des Heizkessels ist, dass die zeitliche Dauer der Abkühlzyklen der Mediumtemperatur vergleichsweise lange sind, d.h. deutlich länger als die Dauer der Aufheizphasen des Heizkessels. Eine Unterscheidung zwischen Aufheiz- bzw. Abkühlphase des Heizkessels kann daher durch Auswertung des zeitlichen Verlaufs der Mediumtemperatur erfolgen. Durch anschließenden Vergleich der Dauer beider Zyklen kann die Pumpe auf die angewendete Regelstrategie des Heizkessels schließen.

Erkennt die Pumpe hierbei eine Vorlauftemperaturregelung des Heizkessels, ist eine Ermittlung der Einbauposition der Umwälzpumpe nicht zwingend notwendig, sondern die dynamische Drehzahlanpassung kann unbedenklich eingesetzt werden. Wird durch die Umwälzpumpe stattdessen eine Rücklauftemperaturregelung erkannt, so ist für die weitere Verfahrensausführung von Bedeutung, ob die Pumpe innerhalb des Vor- bzw. Rücklaufs montiert ist. Auch diese Fallunterscheidung kann die Pumpe selbstständig durch die Beobachtung etwaiger Betriebsbedingungen ermitteln. Hierbei betrachtet die Umwälzpumpe den Temperaturgradienten während einer Aufheizphase. Bei einer rücklaufgesteuerten Regelstrategie des Heizkessels ist der zeitliche Verlauf der Vorlauftemperatur vergleichsweise steil ansteigend, während der parallele Anstieg der Rücklauftemperatur deutlich flacher ist. Durch Ermittlung des Temperaturgradienten kann die Pumpe daher einschätzen, ob sie mittels ihrer internen Sensorik die Vorlauftemperatur bzw. die Rücklauftemperatur erfasst und entsprechend im Vorlauf bzw. Rücklauf montiert ist.

Neben dem erfindungsgemäßen Verfahren betrifft die vorliegende Anmeldung zudem eine Heizungsumwälzpumpe mit einer Pumpensteuerung zur Ausführung des erfindungsgemäßen Verfahrens bzw. einer vorteilhaften Ausgestaltung des Verfahrens. Dementsprechend zeichnet sich die Heizungsumwälzpumpe durch dieselben Vorteile und Eigenschaften aus, wie sie bereits anhand des erfindungsgemäßen Verfahrens ausführlich erläutert wurden. Auf eine wiederholende Beschreibung wird aus diesem Grund verzichtet.

In einer vorteilhaften Ausgestaltung der Heizungsumwälzpumpe umfasst diese eine entsprechende Sensorik zur Erfassung der Mediumtemperatur des von der Pumpe geförderten Heizungsmediums. Alternativ kann die Pumpe auch mit einer entsprechenden externen Sensorik verbindbar sein.

Zuletzt betrifft die vorliegende Erfindung ebenso eine Heizungsanlage mit einem Heizkessel sowie wenigstens einer Heizungsumwälzpumpe gemäß der vorliegenden Erfindung.

Weitere Vorteile und Eigenschaften der Erfindung sollen nachfolgend anhand des in den Zeichnungen dargestellten Ausführungsbeispiels näher erläutert werden. Es zeigen:
- Figur 1:: eine schematische Darstellung eines Heizkreislaufs,
- Figur 2:: zwei Diagrammdarstellungen zur Verdeutlichung des zeitlichen Verlaufs der Mediumtemperatur als auch des Förderstroms in einer Heizungsanlage mit Vorlaufregelung des Heizkessels,
- Figur 3:: zwei Diagrammdarstellungen zur Verdeutlichung des zeitlichen Verlaufs der Mediumtemperatur als auch des Förderstroms in einer Heizungsanlage mit Rücklaufregelung des Kessels,
- Figur 4:: ein Beispieldiagramm zur Verdeutlichung des Verhaltens eines Tiefpassfilters und
- Figur 5:: eine Funktionsskizze zur Prinzipbeschreibung des erfindungsgemäßen Verfahrens mit adaptiver Rampe.

Zunächst soll das Prinzip der dynamischen Drehzahlanpassung bei einer Heizungsumwälzpumpe mit Proportionaldruckregelung beschrieben werden. Die Pumpe kommt innerhalb eines Heizkreislaufs mit Heizkessel und ein oder mehreren Heizkörpern zum Einsatz. Die Heizkörper sind mit Thermostatventilen ausgestattet, die den Durchfluss durch die Heizkörper in Abhängigkeit der Raumtemperatur steuern. Es wird darauf hingewiesen, dass das vorgestellte Verfahren der dynamischen Drehzahlanpassung und dessen hier beschriebene Erweiterung auch bei nicht Proportionaldruckgeregelten Pumpen zum Einsatz kommen kann. Beispielsweise kann die Pumpenregelung alternativ auch eine Konstantdruckregelung oder den von der Anmelderin entwickelten ECO-Mode ausführen. Denkbar ist auch eine Temperaturregelung der Pumpe. Nachfolgende Erläuterungen beziehen sich aber ohne Einschränkung auf eine Pumpe mit Proportionaldruckregelung.

Die Heizungsumwälzpumpe umfasst einen Umrichter mit Drehzahlregelung, die nach einer Proportionaldruck-Regelkurve arbeitet und die Soll-Förderhöhe proportional zum Ist-Förderstrom einstellt. Um die Sollförderhöhe zu erreichen, steigert oder verringert die Pumpenregelung die Drehzahl des Pumpenantriebs unter Berücksichtigung einer einstellbaren Drehzahlrampe, bis die Soll-Förderhöhe erreicht wird. Eine solche Drehzahlrampe verhält sich in funktionaler Hinsicht wie ein Tiefpass-Filter erster Ordnung mit einstellbarer Zeitkonstante.

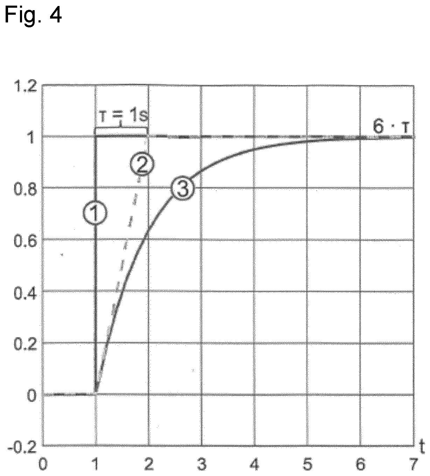

Exemplarisch ist in Figur 4 das zeitliche Verhalten eines bekannten Tiefpasses erster Ordnung gezeigt. Die Figur 4 zeigt einen Sollwertsprung 1 sowie die zugehörige Sprungantwort 3 des Systems. Der Schnittpunkt zwischen der Tangente 2 der Sprungantwort 3 mit dem Endwert ist die Zeitkonstante T. Nach einer Faustregel erreicht die Sprungantwort ihren Endwert nach einer Dauer der sechsfachen Zeitkonstante T.

Um Energie einzusparen, werden zwei Drehzahlrampen verwendet. Ist die Sollförderhöhe Hₛₒₗₗ kleiner als die Ist-Förderhöhe Hᵢₛₜ, dann sinkt die Drehzahl ab. In diesem Fall wird eine steile Drehzahlrampe (niedrige Zeitkonstante) eingestellt, damit die Drehzahl schnell abfällt und die Leistungsaufnahme der Pumpe reduziert wird. Wenn die Sollförderhöhe Hₛₒₗₗ über der Ist-Förderhöhe Hᵢₛₜ liegt, wird stattdessen eine sehr langsame Drehzahlrampe (hohe Zeitkonstante) verwendet, sodass die Drehzahl nur langsam ansteigt und die Ist-Förderhöhe Hᵢₛₜ erst verzögert erreicht wird. In diesem Fall kann es durch die Verzögerung kurzzeitig zu einer Unterversorgung des zu beheizenden Raumes kommen, was aufgrund der üblichen thermischen Trägheit des Raumes aber nicht von den Rauminsassen spürbar ist. Die Pumpe allerdings hat ihre mittlere Leistungsaufnahme reduziert.

Neben der reduzierten Leistungsaufnahme lässt sich mit diesem Verfahren zudem feststellen, ob der Raum tatsächlich eine Unterversorgung erfahren hat oder ob gegebenenfalls eine Förderhöhe kleiner der Soll-Förderhöhe für die Wärmeversorgung der Räume ausreichend ist. Die Erfahrung hat gezeigt, dass die Thermostatventile der Heizkörper sehr schnell auf eine reduzierte Drehzahl reagieren. Wenn die Drehzahl der Pumpe sehr langsam steigt, so schließen sich die Ventile (bei ausreichender Wärmeversorgung des Raumes) im Verhältnis dazu schneller und gleichen eine Überversorgung des Raumes aus. Der Förderstrom bleibt in einem solchen Fall trotz steigender Drehzahl der Umwälzpumpe konstant.

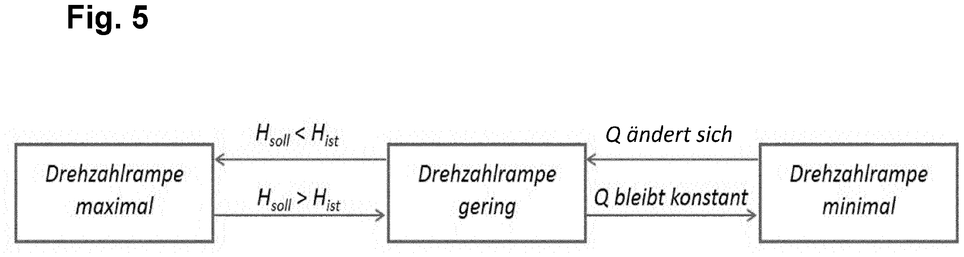

Die Pumpe überwacht fortlaufend während dem Abfahren der Drehzahlrampe ihren Förderstrom. Erkennt die Pumpe in diesem Fall einen konstant bleibenden Förderstrom, so kann die Pumpe den Drehzahlanstieg stoppen, ohne dass der Raum einen Temperaturabfall erfährt. Um fortan zu prüfen, ob der Raum noch ausreichend versorgt bleibt, kann die Pumpe die Drehzahl weiter mit minimaler Drehzahlrampe (nur knapp über null) erhöhen und eine Änderung des Förderstroms prüfen. Dadurch wird permanent überwacht, ob eine Unterversorgung auftritt. Dieses Prinzip ist in Figur 5 verdeutlicht.

Die Erfindung dieser Anmeldung stellt eine Erweiterung des vorgestellten Verfahrens zur dynamischen Drehzahlanpassung dar. Die dynamische Drehzahlanpassung, insbesondere gemäß adaptiver Drehzahlrampe funktioniert gut, sofern der Kessel vorlauftemperaturgeregelt ist, was in der Regel der Fall ist. Einzelne moderne Kesselsysteme sind jedoch rücklauftemperaturgeregelt. Gemäß der vorliegenden Erfindung werden für einen solchen Fall das Schaltverhalten des Kessels und die Wechselwirkungen mit dem Gebäude berücksichtigt.

Dazu muss die Umwälzpumpe zunächst automatisch erkennen, ob der eingesetzte Heizkessel eine Vorlauf- oder Rücklauftemperaturregelung umfasst. Ferner muss die Umwälzpumpe erkennen, ob sie im Vorlauf oder Rücklauf montiert ist. Eine solche Erkennung erfolgt in einem zweistufigen Verfahren. Der erste Schritt ist die Erkennung der ausgeführten Regelart des Kessels, was durch Beobachten des Temperaturverlaufs des geförderten Heizmediums geschieht. Bei einem Kessel mit Rücklaufregelung sind die Abkühlzyklen (Figur 3, Bereich I) sehr lang, insbesondere deutlich länger als die Aufheizphasen (Figur 3, Bereich II, III) des Kessels. Durch Auswerten der Zyklendauer kann die Pumpe die Regelart des Kessels feststellen.

Der zweite Schritt ist die Erkennung der Pumpeneinbaulage. Der eingangs erwähnte kritische Bereich II (Figur 3) zeichnet sich durch einen sehr steilen Anstieg der Vorlauftemperatur aus. Beim Rücklauf ist der Anstiegsgradient deutlich flacher. Durch diese Unterscheidung erkennt die Pumpe, ob sie im Vor- oder Rücklauf eingebaut ist.

Mit dieser Information wird das vorgenannte Verfahren zur dynamischen Drehzahlanpassung gerade für den Fall eines Heizkessels mit Rücklauftemperaturregelung optimiert. Wird eine Rücklauftemperaturregelung erkannt und befindet sich die Umwälzpumpe im Vorlauf, so wird zur Vermeidung des "Kesselverlustproblems", die Drehzahlanpassung gemäß der adaptiven Rampe immer dann deaktiviert, wenn die Pumpe einen schnellen Anstieg der Medientemperatur erkennt, d.h. während der Aufheizphase des Kessels (so bspw. in der besagten kritischen Phase II). Eine weitergehende Lösung sieht vor, die Pumpe immer dann, wenn sie den schnellen Anstieg der Medientemperatur erkennt, mit Maximaldrehzahl zu betreiben. In diesem Fall ist gewährleistet, dass das Medium schnell ins Gebäude gelangt. Sobald der Anstieg weniger steilt erfolgt, schaltet die Pumpe wieder zurück in den normalen Betriebsmodus. Ein dauerhafter Betrieb mit Maximaldrehzahl würde ansonsten die Gefahr eines Kaltlaufens des Kessels massiv erhöhen. Sollte dann, nachdem die Pumpe in den normalen Betriebsmodus geschaltet hat, die Temperaturkurve wieder steiler werden, schaltet die Pumpe nicht noch einmal auf Maximaldrehzahl. Dadurch wird ein ständiges Hoch- und Runterfahren der Drehzahl vermieden. Dies kann bspw. dadurch erreicht werden, indem die Pumpe innerhalb eines Zeitfensters (z.B.: 10 Minuten) nur einmalig auf Maximaldrehzahl hochfahren darf. Während der Phase III erfolgt ebenfalls eine Deaktivierung der adaptiven Rampe, da hier der Förderstrom abnimmt. In der Phase I kann eine dynamische Drehzahlanpassung eingesetzt werden.

Sofern die Pumpe im Rücklauf eingebaut ist, erfasst sie über ihre internen Erfassungsmittel die Rücklauftemperatur. Ist der Kessel vorlauftemperaturgeregelt, so spielt die Position der Pumpe keine Rolle. Wenn der Kessel jedoch rücklauftemperaturgeregelt ist, dann ist das zuvor beschriebene "Kesselverlustproblem" zu beachten. Allerdings hat die Pumpe in diesem Fall in der Regel keine Möglichkeit die aktuelle Betriebsphase des Kessels rechtzeitig zu erkennen, da der Anstieg der Rücklauftemperatur zeitversetzt zum Anstieg der Vorlauftemperatur erfolgt. Daher wird für diesen Fall die adaptive Rampe grundsätzlich nicht verwendet. Eine Ausnahme wäre hier, wenn die Pumpe über ein externes Signal die Vorlauftemperatur erkennen kann.

## Patentansprüche

1. Verfahren zur Regelung einer Heizungsumwälzpumpe mit variabler Drehzahl in einer hydraulischen Heizungsanlage mit Heizkessel, wobei die Pumpenregelung die Soll-Förderhöhe vorgibt und die Drehzahl zur Erreichung der Soll-Förderhöhe anpasst, **dadurch gekennzeichnet, dass** eine dynamische Drehzahlanpassung vorgesehen ist, die die Geschwindigkeit der Drehzahländerung abhängig davon, ob die Soll-Förderhöhe größer oder kleiner der Ist-Förderhöhe ist, und abhängig von der ausgeführten Regelart des Heizungskessels einstellt, wobei die Regelart des Heizkessels als Vorlauftemperatur- oder Rücklauftemperaturregelung ausgeführt ist.

2. Verfahren nach Anspruch 1, **dadurch gekennzeichnet, dass** bei einem Heizkessel mit Regelung der Rücklauftemperatur eine Deaktivierung der dynamischen Drehzahlanpassung erfolgt.

3. Verfahren nach Anspruch 1 oder 2, **dadurch gekennzeichnet, dass** eine Deaktivierung der dynamischen Drehzahlanpassung der Umwälzpumpe bei einem Heizkessel mit Rücklauftemperaturregelung nur während der Aufheizphasen des Heizkessels erfolgt.

4. Verfahren nach Anspruch 3, **dadurch gekennzeichnet, dass** die Deaktivierung der dynamischen Drehzahlanpassung in Abhängigkeit des Temperaturgradienten der Vorlauftemperatur der Heizungsanlage erfolgt.

5. Verfahren nach Anspruch 3 oder 4, **dadurch gekennzeichnet, dass** während einer Kesselaufheizphase die Umwälzpumpe zumindest zeitweise mit maximaler Drehzahl betrieben wird, insbesondere solange der Temperaturgradient einen vordefinierten Schwellwert übersteigt.

6. Verfahren nach Anspruch 5, **dadurch gekennzeichnet, dass** bei einer bestimmten Abnahme des Temperaturgradienten der Vorlauftemperatur, insbesondere bei einer Schwellwertunterschreitung, die Pumpe mit der vormals eingestellten Soll-Drehzahl betrieben wird.

7. Verfahren nach Anspruch 6, **dadurch gekennzeichnet, dass** eine Schwellwertgetriggerte Umschaltung der Pumpendrehzahl auf die maximale Pumpendrehzahl innerhalb eines definierten Zeitfensters auf eine spezifische Maximalanzahl von Umschaltvorgängen begrenzt ist, insbesondere darf die Pumpenregelung während eines definierten Zeitfensters nur einmal auf die maximale Drehzahl umschalten.

8. Verfahren nach einem der vorhergehenden Ansprüche, **dadurch gekennzeichnet, dass** die Heizungsumwälzpumpe unmittelbar nach Inbetriebnahme oder ereignisgesteuert eine automatische Erkennung der Regelart des in der Heizungsanlage eingesetzten Heizkessels vornimmt, d.h. feststellt, ob der Heizkessel mit einer Vorlauf- oder Rücklaufregelung betrieben wird, und gegebenenfalls, insbesondere bei erkannter Rücklaufregelung des Heizkessels, automatisch feststellt, ob die Pumpe innerhalb des Vorlaufs oder Rücklaufs der Heizungsanlage verbaut ist.

9. Verfahren nach Anspruch 8, **dadurch gekennzeichnet, dass** eine Erkennung der Regelart durch eine Beobachtung der Mediumtemperatur über eine definierte Zeitspanne erfolgt, wobei die Pumpe die Regelart insbesondere durch einen Vergleich der detektierten Abkühl- und Aufheizzyklen, insbesondere hinsichtlich der Zyklendauer erkennt.

10. Verfahren nach Anspruch 8 oder 9, **dadurch gekennzeichnet, dass** die Einbauposition der Heizungsumwälzpumpe bei erkannter Rücklaufregelung anhand des Temperaturgradienten des Mediums während eines Aufheizzyklus erkannt wird, insbesondere wird eine Montage innerhalb des Vorlaufs erkannt, falls der Temperaturgradient einen gewissen Schwellwert überschreitet.

11. Heizungsumwälzpumpe mit einer Pumpensteuerung die dazu ausgebildet ist:
- die Soll-Förderhöhe vorzugeben,
- die Ist-Förderhöhe zu ermitteln,
- Kenntnis über die angewendete Kesselregelung zu haben,
- die Drehzahl zur Erreichung der Soll-Förderhöhe dynamisch anzupassen, und
- das Verfahren gemäß einem der vorhergehenden Ansprüche auszuführen.

12. Heizungsumwälzpumpe nach Anspruch 11, **dadurch gekennzeichnet, dass** die Pumpe eine Sensorik zur Erfassung der Mediumtemperatur im Vorlauf aufweist oder mit einer entsprechenden externen Sensorik verbindbar ist.

13. Heizungsanlage mit einem Heizkessel und wenigstens einer Heizungsumwälzpumpe gemäß einem der Ansprüche 11 oder 12.

## Claims

1. Method for controlling a variable-speed heating circulating pump in a hydraulic heating system having a heating boiler, wherein the pump control specifies the setpoint delivery head and adapts the speed, in order to achieve the setpoint delivery head, **characterized in that** a dynamic speed adjustment is provided which sets the rate of the speed change depending on whether the setpoint delivery head is larger or smaller than the actual delivery head and depending on the type of control of the heating boiler which is implemented, wherein the type of control of the heating boiler is realized as feed temperature or backflow temperature control.

2. Method according to Claim 1, **characterized in that** in the case of a heating boiler with backflow temperature control, the dynamic speed adjustment is deactivated.

3. Method according to Claim 1 or 2, **characterized in that** a deactivation of the dynamic speed adjustment of the circulating pump in the case of a heating boiler with backflow temperature control only takes place during the heating phases of the heating boiler.

4. Method according to Claim 3, **characterized in that** the deactivation of the dynamic speed adjustment takes place depending on the temperature gradient of the feed temperature of the heating system.

5. Method according to Claim 3 or 4, **characterized in that** during a boiler heating phase, the circulating pump is operated at least temporarily at maximum speed, in particular provided the temperature gradient exceeds a predefined threshold value.

6. Method according to Claim 5, **characterized in that** when there is a particular drop in the temperature gradient of the feed temperature, in particular when a threshold value is not reached, the pump is operated at the set point speed which was previously set.

7. Method according to Claim 6, **characterized in that** a threshold value-triggered switchover of the pump speed to the maximum pump speed within a defined time slot is limited to a specific maximum number of switching actions, in particular the pump control may switch to the maximum speed only once during a defined time slot.

8. Method according to one of the preceding claims, **characterized in that** the heating circulating pump automatically detects the type of control used by the heating boiler in the heating system immediately after commissioning or in an event-controlled manner, i.e. it determines whether the heating boiler is operated with a feed or backflow control and, where appropriate, automatically determines, particularly when a backflow control is detected for the heating boiler, whether the pump is installed within the feed or backflow of the heating system.

9. Method according to Claim 8, **characterized in that** the control type is detected by observing the medium temperature over a defined period of time, wherein the pump identifies the type of control, in particular by comparing the cooling and heating cycles detected, in particular with regard to the cycle duration.

10. Method according to Claim 8 or 9, **characterized in that** the installation position of the heating circulating pump when backflow control has been recognized is detected with the help of the temperature gradient of the medium during the heating cycle, in particular installation within the feed is identified if the temperature gradient exceeds a certain threshold value.

11. Heating circulating pump having a pump control which is configured:
- to specify the setpoint delivery head,
- to determine the actual delivery head,
- to be aware of the boiler control system used,
- to dynamically adjust the speed in order to achieve the setpoint delivery head,
- to implement the method according to one of the preceding claims.

12. Heating circulating pump according to Claim 11, **characterized in that** the pump has sensors for detecting the medium temperature in the feed or can be connected to corresponding external sensors.

13. Heating system having a heating boiler and at least one heating circulating pump according to one of Claims 11 or 12.

## Revendications

1. Procédé de régulation d'une pompe de circulation de chauffage à vitesse de rotation variable dans une installation de chauffage hydraulique comprenant une chaudière, la régulation de pompe spécifiant la hauteur de refoulement cible et ajustant la vitesse de rotation afin d'atteindre la hauteur de refoulement cible, **caractérisé en ce qu'**une adaptation de vitesse de rotation dynamique est prévue qui modifie la rapidité de la variation de vitesse de rotation selon que la hauteur de refoulement cible est supérieure ou inférieure à la hauteur de refoulement réelle, et selon le type de régulation de la chaudière qui est effectué, le type de régulation de la chaudière étant conçu comme une régulation de la température de la section montante ou de la température de la section de retour.

2. Procédé selon la revendication 1, **caractérisé en ce que**, dans le cas d'une chaudière comprenant une régulation de la température de section de retour, l'adaptation de la vitesse de rotation est désactivée.

3. Procédé selon la revendication 1 ou 2, **caractérisé en ce que**, dans le cas d'une chaudière comprenant une régulation de température de section retour, une désactivation de l'adaptation de vitesse de rotation dynamique de la pompe de circulation n'est effectuée que pendant les phases de chauffage de la chaudière.

4. Procédé selon la revendication 3, **caractérisé en ce que** la désactivation de l'adaptation de vitesse de rotation dynamique est effectuée en fonction du gradient de la température de section montante de l'installation de chauffage.

5. Procédé selon la revendication 3 ou 4, **caractérisé en ce que**, pendant une phase de chauffage de la chaudière, la pompe de circulation est actionnée au moins temporairement à une vitesse de rotation maximale, notamment tant que le gradient de température dépasse une valeur seuil prédéfinie.

6. Procédé selon la revendication 5, **caractérisé en ce que**, dans le cas d'une diminution déterminée du gradient de la température de section montante, en particulier lorsque la valeur seuil est franchie vers le bas, la pompe fonctionne à la vitesse de rotation cible préalablement réglée.

7. Procédé selon la revendication 6, **caractérisé en ce qu'**une commutation, déclenchée par seuil, de la vitesse de rotation de la pompe sur la vitesse de rotation de pompe maximale dans une fenêtre temporelle définie est limitée à un nombre maximal spécifié de processus de commutation, en particulier la régulation de la pompe ne peut commuter qu'une seule fois à la vitesse de rotation maximale dans une fenêtre temporelle définie.

8. Procédé selon l'une des revendications précédentes, **caractérisé en ce que** la pompe de circulation de chauffage effectue une détection automatique du type de régulation de la chaudière utilisée dans l'installation de chauffage immédiatement après la mise en service ou en fonction d'un événement, c'est-à-dire qu'elle détermine en particulier si la chaudière est utilisée avec une régulation de section montante ou de section de retour, et si nécessaire, notamment dans le cas d'une régulation de section de retour de la chaudière, elle détermine automatiquement si la pompe est installée dans la section montante ou la section de retour de l'installation de chauffage.

9. Procédé selon la revendication 8, **caractérisé en ce que** le type de régulation est reconnu par l'observation de la température du milieu sur une période définie, la pompe reconnaissant le type de régulation notamment en comparant les cycles de refroidissement et de chauffage détectés, notamment en ce qui concerne la durée des cycles.

10. Procédé selon la revendication 8 ou 9, **caractérisé en ce que** la position d'installation de la pompe de circulation de chauffage est reconnue lors de la reconnaissance de la régulation de section de retour sur la base du gradient de température du milieu pendant un cycle de chauffage, en particulier un montage dans la section montante est reconnu si le gradient de température dépasse une certaine valeur seuil.

11. Pompe de circulation de chauffage comprenant une commande de pompe qui est conçue pour :
- spécifier la hauteur de refoulement cible,
- déterminer la hauteur de refoulement réelle,
- avoir des connaissances sur la régulation de chaudière utilisée,
- adapter dynamiquement la vitesse de rotation afin d'atteindre la hauteur de refoulement cible, et
- mettre en œuvre le procédé selon l'une des revendications précédentes.

12. Pompe de circulation de chauffage selon la revendication 11, **caractérisée en ce que** la pompe comporte un système de capteurs destiné à détecter la température du milieu dans la section montante ou peut être reliée à un système de capteurs extérieur correspondant.

13. Installation de chauffage comprenant une chaudière et au moins une pompe de circulation de chaleur selon l'une des revendications 11 ou 12.
